# EUROPÄISCHE PATENTSCHRIFT

(11) **EP 1 139 065 B1**
(45) Veröffentlichungstag und Bekanntmachung des Hinweises auf die Patenterteilung: **17.06.2009**
(21) Anmeldenummer: 01105223.0
(22) Anmeldetag: 03.03.2001
(51) Int. Cl.: G01C 21/26, G08G 1/09

(54) **Verfahren zur Auswahl eines Rundfunksenders für dynamische Fahrzeugnavigation**
Method for selecting a radio station for dynamic vehicle navigation
Méthode pour sélectionner un émetteur radio pour navigation véhiculaire dynamique

(30) Priorität: 30.03.2000 DE 10015765
(43) Veröffentlichungstag der Anmeldung: 04.10.2001
(73) Patentinhaber: Continental Automotive GmbH, 30165 Hannover (DE)
(72) Erfinder: Völkel, Andreas, 35619 Braunfels (DE)

(56) Entgegenhaltungen:
- EP-A- 0 866 576
- DE-A- 19 710 863
- US-A- 5 933 094

## Beschreibung

Die Erfindung betrifft ein Verfahren zur Auswahl eines Rundfunksenders in einem Autoradio, das mit einem Navigationssystem derart verbunden ist, dass ein Datenaustausch zwischen dem Autoradio und dem Navigationssystem durchführbar ist. Weiterhin betrifft die Erfindung ein kombiniertes Radio-/Navigationssystem für Kraftfahrzeuge mit einem Rundfunkempfänger, Mitteln zur Bestimmung der Fahrzeugposition und einem einer Recheneinheit zugeordneten Speicherelement.

Aus der EP-A-0 866 576 ist eine Auswahl relevanter TMC-Meldungen anhand eines automatisch bestimmten Standortes bekannt. Die Standortbestimmung kann durch die Auswertung der empfangbaren Rundfunksender oder durch ein Navigationssystem erfolgen.

Aus der DE-A-197 10 863 ist ein Verfahren zur geographischen Selektion von digital codierten Meldungen bekannt, die von mehreren Sendern ausgestrahlt werden und Ortsinformationen enthalten, die in Empfängern mit von der jeweiligen Position der Empfänger abhängigen Selektionsinformationen verglichen werden. Die Sender strahlen ferner ihren Sendebereich kennzeichnende Selektionsinformationen aus, die im Empfänger mit in den Meldungen enthaltenen Ortsinformationen verglichen werden.

Autoradios sind ein Zubehörteil, das seit langem in Kraftfahrzeugen zur Unterhaltung und Information des Fahrers und der Mitfahrer eingesetzt wird. Von besonderer Bedeutung sind hierbei die von den Rundfunkanstalten ausgesendeten Verkehrsinformationen, mit denen der Fahrer auf Verkehrsbehinderungen hingewiesen wird. Die Meldungen zu Verkehrsbehinderungen können dazu im Rundfunkprogramm zu bestimmten Zeiten ausgesendet werden. Mit dem sogenannten Traffic-Message-Channel (TMC) des Radio-Datensystems (RDS) können solche Verkehrsinformationen auch als Datenblock voll digitalisiert übertragen werden. Diese Datenblöcke werden im Autoradio in eine optische oder akustische Ausgabeform umgewandelt und stehen jederzeit zur Verfügung, und zwar unabhängig vom jeweils aktuell laufenden Radioprogramm. Es ist weiterhin bekannt, solche Verkehrsinformationen bei der Routenplanung mittels eines Kraftfahrzeug-Navigationssystems zu berücksichtigen. Hierzu wird ein RDS/TMC-fähiges Autoradio mit dem Navigationssystem derart verbunden, dass die Daten des RDS/TMC Systems von dem Autoradio zu dem Rechner des Navigationssystems übertragen und bei der Routenberechnung berücksichtigt werden. Bieten mehrere Rundfunksender, die in dem Fahrzeug empfangen werden können, entsprechende Verkehrsinformationen an, so kann beispielsweise automatisch derjenige Sender eingestellt werden, dessen Signal mit der höchsten Signalintensität empfangen wird. Hierbei wird davon ausgegangen, dass dies auch derjenige Sender ist, der die für das momentan befahrene Gebiet zutreffenden Verkehrsinformationen zur Verfügung stellt. In geographischen Randbereichen des Sendegebiets eines Rundfunksenders kann jedoch die Situation auftreten, dass ein Sender, der einem anderen geographischen Gebiet zugeordnet ist, mit einer höheren Signalintensität empfangen wird. Hierbei besteht die Gefahr, dass der ausgewählte Sender nicht die für das momentan befahrene Gebiet bestimmten Verkehrsinformationen zur Verfügung stellt.

Hier setzt nun die vorliegende Erfindung ein, deren Aufgabe es ist, ein Verfahren zur Auswahl eines Senders anzugeben mit dem sichergestellt wird, dass der eingestellte Rundfunksender auch Verkehrsinformationen für das aktuell befahrene Gebiet zur Verfügung stellt. Eine weitere Aufgabe der Erfindung ist es, ein kombiniertes Radio-Navigationssystem für Kraftfahrzeuge zur Verfügung zu stellen mit dem ein solches Verfahren ausführbar ist.

Die erstgenannte Aufgabe wird gelöst mit den Verfahrensschritten:
- Fortlaufendes Ermitteln der Fahrzeugposition während der Fahrt durch das Navigationssystem,
- Ermitteln der Empfangsfrequenz eines der aktuellen Fahrzeugpositionen zugeordneten Rundfunksenders, der Verkehrsinformationen aussendet, aus im Fahrzeug abgespeicherten Daten,
- Prüfen der aktuellen Empfangsqualität der so ermittelten Empfangsfrequenz durch Vergleich mit einem Schwellenwert,
- Einstellen des Autoradios auf die so ermittelte Empfangsfrequenz des Rundfunksenders bei ausreichender Empfangsqualität zum Empfang von Verkehrsinformationen.

Bei dem erfindungsgemäßen Verfahren wird somit nicht automatisch der Sender mit der höchsten Empfangsqualität zum Empfang von Verkehrsinformationen eingestellt. Vielmehr sind im Fahrzeug Daten abgespeichert, die die Zuordnung eines Verkehrsnachrichten aussendenden Rundfunksenders zu geographischen Gebieten erlauben. Die dafür erforderlichen Daten sind typischerweise zusammen mit den Straßenkartendaten, die für die Routenberechnung benötigt werden, auf einem Speicherelement abgespeichert. Insbesondere kann es sich hierbei um eine CD-ROM oder eine DVD handeln. Durch das Navigationssystem wird fortlaufend die Fahrzeugposition ermittelt. Weiterhin wird der zu der aktuellen Fahrzeugposition gehörende Rundfunksender, der Verkehrsinformationen aussendet, aus den abgespeicherten Informationen bestimmt. Diese Aufgabe kann insbesondere von dem Navigationsrechner durchgeführt werden. Anschließend wird geprüft, ob der zugeordnete Rundfunksender momentan eingestellt ist. Dieser Vergleich kann sowohl im Navigationssystem als auch in einem Rechner des Autoradios durchgeführt werden. In ersterem Falle müssen die Informationen über den momentan empfangenen Sender von dem Autoradio an das Navigationssystem übermittelt werden. Im zweiten Fall muss der zugeordnete Rundfunksender an das Autoradio übermittelt werden. Ist der der aktuellen Fahrzeugposition zugeordnete Rundfunksender nicht eingestellt, so wird zunächst geprüft mit welcher Empfangsqualität dieser empfangen wird. Das genaue Vorgehen hierzu ist abhängig vom Aufbau des Autoradios. Handelt es sich um ein Autoradio mit einem einzelnen Empfänger, so kann kurzzeitig auf die Frequenz des neuen Rundfunksenders umgeschaltet werden. Zudem wird die Empfangsqualität des zugeordneten Rundfunksenders durch Vergleich mit einem Schwellenwert ermittelt. Die Umschaltung auf die neue Frequenz kann hierbei beispielsweise nur für etwa 100 ms erfolgen. Kann der komplette Prüfschritt innerhalb dieser Zeitspanne durchgeführt werden und ist das Ergebnis der Prüfung positiv, so wird die eingestellt Empfangsfrequenz beibehalten. Wird für die Prüfung jedoch ein längerer Zeitraum benötigt, so kann das Radiogerät auch zunächst wieder zu der ursprünglichen Empfangsfrequenz zurückspringen, sodass nur eine vergleichsweise kurze Unterbrechung des Radioempfangs entsteht. Nach Abschluss der Prüfung wird dann bei positiver Bewertung der Empfangsqualität des der aktuellen Fahrzeugposition zugeordneten Rundfunksenders erneut das Autoradio auf dessen Empfangsfrequenz eingestellt.

Handelt sich bei dem Autoradio um ein solches mit zwei Empfangsteilen, so kann das vom Fahrer eingestellte Rundfunkprogramm mit dem ersten Empfangsteil weiterhin ungestört empfangen werden, während das zweite Empfangsteil auf die Frequenz des der aktuellen Fahrzeugposition zugeordneten Rundfunksender abgestimmt und die Prüfung der Empfangsqualität durchgeführt wird, ohne dass der Fahrer dies bemerkt. Zur Unterhaltung der Fahrzeuginsassen und zum Empfang von Verkehrsinformationen für die Routenführung können dabei unterschiedliche Rundfunksender eingestellt sein.

In einer besonderen Ausführungsform des erfindungsgemäßen Verfahrens ist vorgesehen, dass die im Fahrzeug abgespeicherten Daten eine eindeutige Zuordnung von Rundfunksendern zu geographischen Gebieten enthalten. Dies bedeutet, dass jedem geographischen Gebiet nur ein einziger Rundfunksender zugeordnet ist, der dann vorzugsweise für den Empfang von Verkehrsinformationen angewählt wird. Da jedoch Verkehrsinformationen für ein bestimmtes geographisches Gebiet von verschiedenen Rundfunkanstalten angeboten werden können, ist in einer weiteren Ausführungsform der Erfindung vorgesehen, dass die im Fahrzeug abgespeicherten Daten einer Fahrzeugposition zwei oder mehr Rundfunksender zuordnen, wobei die Rundfunksender mit einer Priorität versehen sind. Der Vorteil dieses Verfahrens liegt insbesondere darin, dass ein weiterer Rundfunksender angewählt werden kann, der Verkehrsinformationen ausstrahlt, wenn die Empfangsqualität des zuerst angewählten Rundfunksenders mit Verkehrsinformationen unzureichend ist. Hierdurch ergibt sich eine deutlich erhöhte Wahrscheinlichkeit, dass der ausgewählte Rundfunksender die aktuellsten Verkehrsinformationen für das entsprechende Sendegebiet ausstrahlt. Zusätzlich können weitere Parameter für die Priorität aus empfangenen Kenndaten der Sender abgeleitet werden, wenn solche von den Sendern bereitgestellt werden. Dies ist insbesondere bei Sendern der Fall, die RDS-TMC Daten ausstrahlen.

Während das Verfahren grundsätzlich zur Auswahl eines Rundfunksenders, der Verkehrsinformationen ausstrahlt, eingesetzt werden kann, wird es besonders vorteilhaft dann eingesetzt, wenn die Verkehrsinformationen bei der Routenberechnung und Zielführung durch ein Navigationssystem berücksichtigt werden.

In einer weiteren Ausführungsform des Verfahrens ist vorgesehen, dass zusätzliche eine von dem Navigationssystem berechnete Route zur Bestimmung des anzuwählenden Rundfunksender berücksichtigt wird. Dies ist insbesondere dann von Vorteil, wenn die berechnete Route nur kurzzeitig durch ein geographisches Gebiet führt, dem ein anderer Rundfunksender zugeordnet ist. In diesem Fall kann ein nur kurzfristiges Umschalten auf einen anderen Rundfunksender vermieden werden, sodass insbesondere bei einem Radiogerät mit einem einzigen Rundfunkempfänger die durch das Einstellen und Prüfen des der aktuellen Fahrzeugposition zugeordneten Rundfunksenders auftretenden Empfangspausen vermieden werden.

Die berechnete Route kann aber auch derart zur Bestimmung des anzuwählenden Rundfunksenders berücksichtigt werden, dass die aktuelle Fahrzeugposition mit der berechneten Route verglichen wird und die für der Auswahl des Rundfunksenders maßgebliche Fahrzeugposition eine gegenüber der aktuellen Fahrzeugposition in Richtung des Fahrziels auf der Route versetzte Position ist. Hierdurch wird erreicht, dass bereits vor Erreichen eines neuen geographischen Gebietes, dem ein anderer Rundfunksender zugeordnet ist, auf diesen neuen Rundfunksender umgeschaltet wird. Dieses verfrühte Umschalten kann beispielsweise bereits in einer festen Entfernung vor Erreichen des neuen geographischen Gebiets erfolgen. Somit können bereits frühzeitig Verkehrsinformationen zu diesem neuen geographischen Gebiet bei der Zielführung berücksichtigt werden.

Das erfindungsgemäße Verfahren kann kontinuierlich, quasi-kontinuierlich oder auch in bestimmten Zeitabständen durchgeführt werden. Eine Durchführung des Verfahrens nur in bestimmten Zeitabständen ist insbesondere dann ausreichend, wenn die berechnete Route zur Bestimmung des anzuwählenden Rundfunksenders berücksichtigt wird.

Ein erfindungsgemäßes kombiniertes Radio-Navigationssystem für Kraftfahrzeuge ist **dadurch gekennzeichnet, dass** Daten hinsichtlich einer Zuordnung von Rundfunksendern zu geographischen Positionen in dem Speicherelement abgespeichert sind und Mittel zur Ermittlung einer der Fahrzeugposition zugeordneten Empfangsfrequenz eines Rundfunksenders unter Verwendung der im Speicherelement abgespeicherten Daten, sowie Mittel zur Prüfung der aktuellen Empfangsqualität der so ermittelten Empfangsfrequenz durch Vergleich mit einem Schwellenwert und Mittel zum Entscheiden, ob das System auf die so ermittelte Empfangsfrequenz eingestellt wird in Abhängigkeit vom Prüfergebnis vorhanden sind.

Die Erfindung wird nachfolgend anhand eines Ausführungsbeispiels und der Zeichnung näher erläutert. Es zeigen:
- Fig.1:: die wesentlichen Komponenten eines kombinierten Radio-Navigationssystem,
- Fig. 2:: eine Landkartenskizze zur Erläuterung des Verfahrens,
- Fig. 3:: ein Ablaufdiagramm des erfindungsgemäßen Verfahrens.

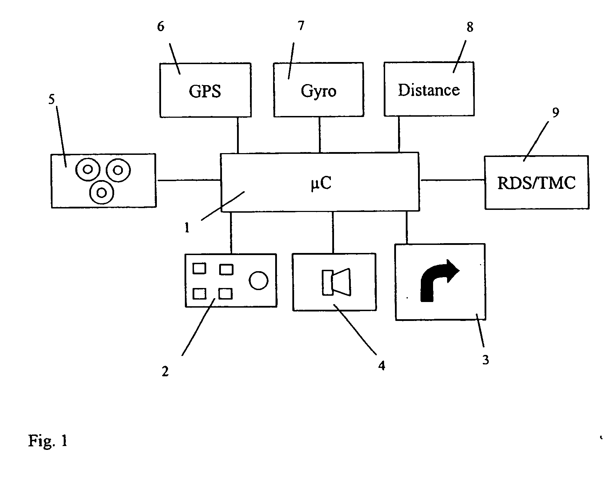

Figur 1 zeigt beispielhaft die Komponenten eines sogenannten On-Bord Navigationssystems für eine dynamische Routenführung, das ein Autoradio einschließt. Wesentlicher Bestandteil des Navigationssystems ist die zentrale Recheneinheit 1. Mit der zentralen Recheneinheit 1 ist eine Eingabeeinheit 2 verbunden, über die beispielsweise ein Zielort eingegeben oder ausgewählt werden kann. Die Ausgabe von Fahrhinweisen erfolgt über die optische Ausgabeeinheit 3 und die akustische Ausgabeeinheit 4. Die Verarbeitung der Eingabebefehle sowie die Aufbereitung der Ausgangssignale für die Ausgabeeinheit erfolgt in der zentralen Recheneinheit 1. Mit der zentralen Recheneinheit 1 ist weiterhin ein CD-Abspielgerät 5 verbunden, das zum Auslesen von Daten von einer CD-ROM geeignet ist. Auf einer solchen CD-ROM sind unter anderem die Straßenkartendaten abgespeichert, die für die Routenberechnung durch die zentrale Recheneinheit 1 erforderlich sind. Des weiteren sind auf der CD Daten vorhanden, die die Zuordnung eines oder mehrerer Rundfunksender zu einem geographischen Gebiet erlauben. Dies kann beispielsweise derart erfolgen, dass jedem Straßenabschnitt der Straßenkartendaten ein oder mehrere Rundfunksender durch einen Code zugeordnet sind. Jedem Code entspricht dabei die Sendefrequenz eines Rundfunksenders bzw. die Kennung eines Sendernetzwerkes mit mehreren Sendefrequenzen. Mit der zentralen Recheneinheit 1 sind ferner ein Empfänger für Satelliten-Navigationssignale 6, ein Richtungssensor 7 und ein Wegstreckensensor 8 verbunden, mit deren Hilfe in an sich bekannter Weise die Positionsbestimmung des Kraftfahrzeugs erfolgt. Weiterhin ist die zentrale Recheneinheit 1 mit einem Autoradio 9 verbunden, das zum Empfang von RDS/TMC Daten ausgelegt ist. Die von dem Autoradio 9 empfangenen Verkehrsnachrichten in Form von standardisierten RDS/TMC Daten werden an die zentrale Recheneinheit 1 des Navigationssystems übermittelt und können bei der Routenberechnung oder Zielführung berücksichtigt werden.

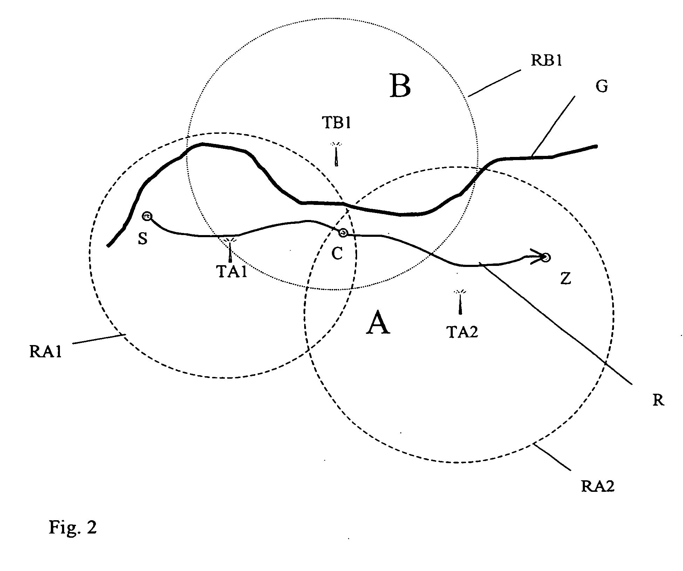

Figur 2 zeigt eine Straßenkartenskizze mit zwei geographisch getrennten Gebieten A und B, die durch die geographische Grenze G getrennt sind. Weiterhin zeigt die Skizze eine Route R zwischen einem Startort S und einem Zielort Z, die vollständig innerhalb des geographischen Gebietes A verlauft. Weiterhin sind die Rundfunksender TA1, TA2 und TB1 dargestellt. Die Rundfunksender TA1 und TA2 strahlen das gleiche Programm ab und sind dem gleichen geographischen Gebiet, nämlich dem geographischen Gebiet A zugeordnet. Der Rundfunksender TB1 ist dagegen dem geographischen Gebiet B zugeordnet und sendet im wesentlichen Verkehrsinformationen, die das geographische Gebiet B betreffen. Zusätzlich sind die Reichweitengrenzen RA1, RA2 und RB1 der Rundfunksender TA1, TA2 und TB1 als Kreise dargestellt. Beim Start des Fahrzeuges wird bei dieser vereinfachten Situation der einzig empfangbare Sender TA1 eingestellt. Auf seiner Route vom Startort S zum Zielort Z durchfährt das Kraftfahrzeug geographische Bereiche, die im Randbereich der Reichweiten der Sender TA1 und TA2 liegen. An der Fahrzeugposition C kann somit die Empfangsqualität des Senders TB1 besser sein als die der Sender TA1 und TA2. Ein Autoradio, dass die Wahl des Senders für Verkehrsinformationen allein aufgrund der Empfangsqualität vornimmt, wird daher im Punkt C den Sender TB1 empfangen. Dieser Sender ist jedoch einem anderen geographischen Gebiet zugeordnet und liefert daher unter Umständen keine Verkehrsinformationen hinsichtlich des von dem Fahrzeug aktuell befahrenen Gebiets. Bei den unterschiedlichen geographischen Gebieten kann es sich beispielsweise um verschiedene Bundesländer der Bundesrepublik Deutschland oder auch um verschiedene Staaten wie beispielsweise Deutschland und Frankreich handeln. Nach dem erfindungsgemäßen Verfahren ist der geographischen Position des Fahrzeuges jeweils mindestens ein Rundfunksender zugeordnet, der Verkehrsinformationen ausstrahlt. Auf der Route R zwischen dem Startort S und dem Zielort Z werden dies ausschließlich die Rundfunksender TA1 und TA2 sein, sodass sichergestellt ist, dass jeweils ein Rundfunksender eingestellt ist der Verkehrsinformationen für das aktuell befahrene Gebiet ausstrahlt.

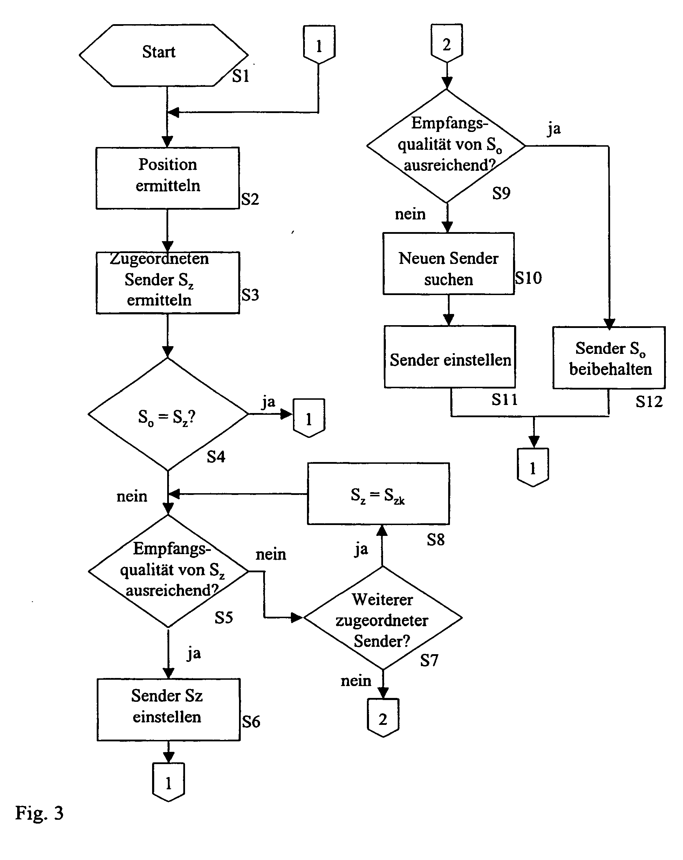

Figur 3 zeigt ein Ablaufdiagramm des erfindungsgemäßen Verfahrens. Nach dem Start des Programms in Schritt S1 wird in Schritt S2 zunächst die Fahrzeugposition durch das Navigationssystem ermittelt. Anschließend wird in Schritt S3 anhand der im Fahrzeug vorhandenen Daten derjenige Rundfunksender ermittelt, der der aktuellen Fahrzeugposition zugeordnet ist. In Schritt S4 wird geprüft ob der der aktuellen Fahrzeugposition zugeordnete Sender S_{z} bereits eingestellt ist (Sₒ=S_{z}). Ist dies der Fall so beginnt das Verfahren erneut mit Schritt S2. Die Schleife der Schritte S2 bis S4 kann kontinuierlich durchlaufen werden. Insbesondere die Ermittlung der Fahrzeugposition ist ohnehin für die Zielführung durch das Navigationssystem fortlaufend erforderlich. Die Ermittlung des der aktuellen Fahrzeugposition zugeordneten Senders in Schritt S3 kann jedoch auch in festen Abständen erfolgen, da die Versorgungsgebiete eines Rundfunksenders in der Regel so groß sind, dass ein kontinuierlicher Ablauf des Verfahrens nicht erforderlich ist.

Wird in Schritt S4 festgestellt, dass der der aktuellen Fahrzeugposition zugeordnete Sender S_{z} nicht zum Empfang von Verkehrsinformationen eingestellt ist, so wird in Schritt S5 zunächst geprüft, ob die Empfangsqualität des zugeordneten Senders ausreichend ist. Hierzu kann die Signalintensität des Rundfunksenders oder auch eine Fehlerrate von digitalen Daten, die eine Überprüfbarkeit durch Bildung von Kontrollsummen bieten, herangezogen werden. Bei einem Autoradio mit einem einzigen Rundfunkempfangsteil kann hierbei eine kurzzeitige Umschaltung auf die neue Radiofrequenz erfolgen, wie dies bereits zuvor beschrieben wurde. Ist die Empfangsqualität des der aktuellen Fahrzeugposition zugeordneten Senders ausreichend, so wird in Schritt S6 dieser Sender für den Empfang von Verkehrsinformationen eingestellt bzw. beibehalten. Das Verfahren startet anschließend erneut in Schritt S2.

Ergibt sich in Schritt S5 dagegen, daß die Empfangsqualität des zugeordneten Senders S_{z} nicht ausreichend ist, so wird in Schritt S7 geprüft, ob weitere Sendestationen der aktuellen Fahrzeugposition zugeordnet sind. Ist dies der Fall, so wird in Schritt S8 die nächste zugeordnete Sendestation S_{zk} ausgewählt und in Schritt S5 einer Überprüfung der Empfangsqualität unterzogen. Diese Schleife wird ggf. so oft wiederholt, bis kein weiterer zugeordneter Sender mehr vorhanden ist, der noch nicht überprüft wurde.

Ist in Schritt S7 kein weiterer zugeordneter Sender mehr vorhanden, so wird in Schritt S9 die Empfangsqualität des ursprünglich eingestellten Senders Sₒ überprüft. Ist diese ausreichend, so wird dieser Sender für den Empfang von Verkehrsinformationen beibehalten (Schritt S12).

Ergibt sich in Schritt S9 dagegen, dass auch die Empfangsqualität des eingestellten Senders Sₒ nicht ausreichend ist, weil sich das Fahrzeug beispielsweise in bergigem Gelände befindet, so wird in Schritt S10 ein neuer Sender für die Übermittlung von Verkehrsinformationen gesucht und in Schritt S11 eingestellt. Hierzu kann beispielsweise in herkömmlicher Weise ein Sendersuchlauf durchgeführt werden.

## Patentansprüche

1. Verfahren zur Auswahl eines Rundfunksenders in einem Autoradio, das mit einem Navigationssystem derart verbunden ist, dass ein Datenaustausch zwischen dem Autoradio und dem Navigationssystem durchführbar ist, mit den Verfahrensschritten:
- Fortlaufendes Ermitteln der Fahrzeugposition während der Fahrt durch das Navigationssystem,
- Ermitteln der Empfangsfrequenz eines der aktuellen Fahrzeugposition zugeordneten Rundfunksenders, der Verkehrsinformationen aussendet, aus im Fahrzeug abgespeicherten Daten,
- Prüfen der aktuellen Empfangsqualität auf der so ermittelten Empfangsfrequenz des Rundfunksenders durch Vergleich mit einem Schwellenwert und
- Einstellen des Autoradios auf die so ermittelte Empfangsfrequenz des Rundfunksenders bei ausreichender Empfangsqualität zum Empfang von Verkehrsinformationen.

2. Verfahren nach Anspruch 1, **dadurch gekennzeichnet, dass** die im Fahrzeug abgespeicherten Daten eine eindeutige Zuordnung von Rundfunksendern zu geographischen Gebieten enthalten.

3. Verfahren nach Anspruch 1, **dadurch gekennzeichnet, dass** die im Fahrzeug abgespeicherten Daten einer Fahrzeugposition zwei oder mehr Rundfunksender zuordnen, wobei die Rundfunksender mit einer Priorität versehen sind.

4. Verfahren nach Anspruch 3, **dadurch gekennzeichnet, daß** zusätzlich weitere Parameter für die Priorität aus empfangenen Kenndaten der Sender abgeleitet werden.

5. Verfahren nach einem der vorhergehenden Ansprüche, **dadurch gekennzeichnet, dass** zusätzlich eine von dem Navigationssystem berechnete Route zur Bestimmung des anzuwählenden Rundfunksenders berücksichtigt wird.

6. Verfahren nach Anspruch 5, **dadurch gekennzeichnet, dass** die aktuelle Fahrzeugposition mit der berechneten Route verglichen wird und die für die Auswahl des Rundfunksenders maßgebliche Fahrzeugposition eine gegenüber der aktuellen Fahrzeugposition in Richtung des Fahrziels auf der Route versetzte Position ist.

7. Verfahren nach einem der vorhergehenden Ansprüche, **dadurch gekennzeichnet, dass** zur Prüfung der Empfangsqualität die Signalintensität des Rundfunksenders oder eine Fehlerrate von digitalen Daten herangezogen wird.

8. Verfahren nach einem der vorhergehenden Ansprüche, **dadurch gekennzeichnet, dass** das Autoradio zum Empfang von RDS-TMC Daten ausgebildet ist.

9. Verfahren nach einem der vorhergehenden Ansprüche, **dadurch gekennzeichnet, dass** die Verkehrsinformationen, insbesondere in Form von RDS-TMC Daten, an das Navigationssystem weitergeleitet und bei der Routenberechnung berücksichtigt werden.

10. Kombiniertes Radio-/Navigationssystem für Kraftfahrzeuge mit einem Autoradio, Mitteln zur Bestimmung der Fahrzeugposition und einem einer Recheneinheit zugeordneten Speicherelement, wobei Daten hinsichtlich einer Zuordnung von Rundfunksendern zu geographischen Positionen in dem Speicherelement abgespeichert sind, **dadurch gekennzeichnet, dass**
- Mittel zur Ermittlung einer der Fahrzeugposition zugeordneten Empfangsfrequenz eines Rundfunksenders unter Verwendung der im Speicherelement abgespeicherten Daten, sowie
- Mittel zum Prüfen der aktuellen Empfangsqualität der so ermittelten Empfangsfrequenz durch Vergleich mit einem Schwellenwert und
- Mittel zum Entscheiden, ob das System auf die so ermittelte Empfangsfrequenz eingestellt wird in Abhängigkeit vom Prüfergebnis vorhanden sind.

11. Kombiniertes Radio-/Navigationssystem nach Anspruch 10, **dadurch gekennzeichnet, dass** das Autoradio (9) zum Empfang von RDS-TMC Daten ausgebildet ist.

12. Kombiniertes Radio-/Navigationssystem nach Anspruch 10, **dadurch gekennzeichnet, dass** es eine Eingabeeinheit (2) zur Eingabe oder Auswahl eines Zielortes, eine Ausgabeeinheit (3, 4) zur Ausgabe von Zielführungsinformationen und eine Datei mit digitalen Straßenkartendaten enthält und zur Durchführung einer Routenplanung ausgelegt ist.

## Claims

1. Method for selecting a broadcast radio station in a car radio which is connected to a navigation system such that data interchange can be carried out between the car radio and the navigation system, having the following method steps:
- the vehicle position is continuously ascertained during the journey by the navigation system,
- the reception frequency of a broadcast radio station which is associated with the current vehicle position and which broadcasts traffic information is ascertained from data stored in the vehicle,
- the current reception quality on the broadcast radio station's reception frequency ascertained in this manner is checked by comparing it with a threshold value, and
- the car radio is set to the broadcast radio station's reception frequency ascertained in this manner if there is sufficient reception quality to receive traffic information.

2. Method according to Claim 1, **characterized in that** the data stored in the vehicle contain an explicit association between broadcast radio stations and geographical areas.

3. Method according to Claim 1, **characterized in that** the data stored in the vehicle associate two or more broadcast radio stations with a vehicle position, the broadcast radio stations being provided with a priority.

4. Method according to Claim 3, **characterized in that** additionally further parameters for the priority are derived from received characteristic data from the stations.

5. Method according to one of the preceding claims, **characterized in that** additionally a route calculated by the navigation system is taken into account for determining the broadcast radio station which needs to be selected.

6. Method according to Claim 5, **characterized in that** the current vehicle position is compared with the calculated route, and the vehicle position which is definitive for the selection of the broadcast radio station is a position which is displaced on the route in the direction of the travel destination in comparison with the current vehicle position.

7. Method according to one of the preceding claims, **characterized in that** the reception quality is checked using the signal intensity of the broadcast radio station or an error rate for digital data.

8. Method according to one of the preceding claims, **characterized in that** the car radio is designed to receive RDS-TMC data.

9. Method according to one of the preceding claims, **characterized in that** the traffic information, particularly in the form of RDS-TMC data, is forwarded to the navigation system and is taken into account for the route calculation.

10. Combined radio/navigation system for motor vehicles with a car radio, means for determining the vehicle position and a memory element associated with a computation unit, wherein data concerning an association between broadcast radio stations and geographical positions are stored in the memory element, **characterized in that**
- means for ascertaining a reception frequency - associated with the vehicle position - of a broadcast radio station using the data stored in the memory element, and also
- means for checking the current reception quality of the reception frequency ascertained in this manner by comparing it with a threshold value and
- means for deciding whether the system is set to the reception frequency ascertained in this manner on the basis of the result of the check are present.

11. Combined radio/navigation system according to Claim 10, **characterized in that** the car radio (9) is designed to receive RDS-TMC data.

12. Combined radio/navigation system according to Claim 10, **characterized in that** it contains an input unit (2) for the input or selection of a destination, an output unit (3, 4) for the output of routing information and a file with digital roadmap data and is designed to perform route planning.

## Revendications

1. Procédé permettant de sélectionner un émetteur de radiodiffusion sur un poste autoradio, lequel est relié à un système de navigation de manière telle qu'il est possible de procéder à un échange de données entre le poste autoradio et le système de navigation, ledit procédé comportant les étapes suivantes:
- détermination en continu, par le système de navigation, de la position du véhicule pendant sa course,
- détermination, à partir de données mémorisées dans le véhicule, de la fréquence de réception d'un émetteur de radiodiffusion correspondant à la position actuelle du véhicule et émettant des informations relatives au trafic routier,
- vérification, par comparaison avec une valeur seuil, de la qualité actuelle de réception sur la fréquence de réception de l'émetteur de radiodiffusion ainsi déterminée et
- si la qualité de réception est suffisante pour recevoir des informations relatives au trafic routier, réglage du poste autoradio sur la fréquence de réception de l'émetteur de radiodiffusion ainsi déterminée.

2. Procédé selon la revendication 1, **caractérisé par le fait que** les données mémorisées dans le véhicule renferment une correspondance claire entre des émetteurs de radiodiffusion et des régions géographiques.

3. Procédé selon la revendication 1, **caractérisé par le fait que** les données mémorisées dans le véhicule affectent deux ou plusieurs émetteurs de radiodiffusion à une position du véhicule, les émetteurs de radiodiffusion étant dotés d'une priorité.

4. Procédé selon la revendication 3, **caractérisé par le fait que**, en outre, d'autres paramètres relatifs à la priorité sont déduits des caractéristiques reçues.

5. Procédé selon l'une des revendications précédentes, **caractérisé par le fait que**, en outre, un itinéraire calculé par le système de navigation est pris en considération pour la détermination de l'émetteur de radiodiffusion à sélectionner.

6. Procédé selon la revendication 5, **caractérisé par le fait que** la position actuelle du véhicule est comparée avec l'itinéraire calculé et que la position du véhicule, qui est déterminante pour la sélection de l'émetteur de radiodiffusion, est une position décalée, par rapport à la position actuelle du véhicule, dans la direction de la destination de la course sur l'itinéraire.

7. Procédé selon l'une des revendications précédentes, **caractérisé par le fait que**, pour le contrôle de la qualité de la réception, on fait appel à l'intensité du signal de l'émetteur de radiodiffusion ou à un taux d'erreur de données numériques.

8. Procédé selon l'une des revendications précédentes, **caractérisé par le fait que** le poste autoradio est conçu pour la réception de données RDS-TMC (Radio System Data / Traffic Message Channel).

9. Procédé selon l'une des revendications précédentes, **caractérisé par le fait que** les informations relatives au trafic routier sont transmises, notamment sous la forme de données RDS-TMC (Radio System Data / Traffic Message Channel), au système de navigation et qu'elles sont prises en compte lors du calcul de l'itinéraire.

10. Système combiné de radiodiffusion et de navigation pour véhicules automobiles, comportant un poste autoradio, des moyens pour la détermination de la position du véhicule et un élément de mémorisation affecté à une unité de calcul, des données relatives à une correspondance entre des émetteurs de radiodiffusion et des positions géographiques étant stockées dans l'élément de mémorisation, **caractérisé par le fait qu**'il existe
- des moyens permettant, en utilisant les données stockées dans l'élément de mémorisation, de déterminer une fréquence de réception d'un émetteur de radiodiffusion correspondant à la position du véhicule, ainsi que
- des moyens permettant de contrôler, en la comparant à une valeur seuil, la qualité actuelle de réception de la fréquence de réception ainsi déterminée et
- des moyens permettant de décider, en fonction du résultat du contrôle, si le système doit être réglé sur la fréquence de réception ainsi déterminée.

11. Système combiné de radiodiffusion et de navigation selon la revendication 10, **caractérisé par le fait que** le poste autoradio (9) est conçu pour la réception de données RDS-TMC (Radio System Data / Traffic Message Channel).

12. Système combiné de radiodiffusion et de navigation selon la revendication 10, **caractérisé par le fait qu**'il comprend une unité de saisie (2) permettant de saisir ou de sélectionner une destination, une unité de sortie (3, 4) permettant d'éditer des informations de guidage vers la destination et un fichier avec des données numériques de cartes routières et qu'il est conçu pour exécuter une planification d'itinéraire.
